(19) Europäisches Patentamt / European Patent Office / Office européen des brevets

(11) **EP 2 324 222 B1**

(12) **FASCICULE DE BREVET EUROPEEN**

(45) Date de publication et mention de la délivrance du brevet:
**05.09.2012 Bulletin 2012/36**

(21) Numéro de dépôt: **09740416.4**

(22) Date de dépôt: **30.07.2009**

(51) Int Cl.:
*F02B 47/08* $^{(2006.01)}$     *F02D 41/30* $^{(2006.01)}$
*F02M 25/07* $^{(2006.01)}$

(86) Numéro de dépôt international:
**PCT/FR2009/051533**

(87) Numéro de publication internationale:
**WO 2010/031937 (25.03.2010 Gazette 2010/12)**

(54) **MOTEUR A INJECTION DE CARBURANT DIVISEE EN DEUX PHASES**

MOTOR MIT IN ZWEI PHASEN GETEILTE KRAFTSTOFFEINSPRITZUNG

ENGINE WITH FUEL INJECTION DIVIDED INTO TWO PHASES

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **19.09.2008 FR 0856306**

(43) Date de publication de la demande:
**25.05.2011 Bulletin 2011/21**

(73) Titulaire: **Renault S.A.S.**
**92100 Boulogne-Billancourt (FR)**

(72) Inventeurs:
• **MICHEL, Alexandre**
**F-92160 Antony (FR)**
• **SAVY, Sylvain**
**F-91260 Juvisy Sur Orge (FR)**

(74) Mandataire: **Rougemont, Bernard et al**
**Renault s.a.s**
**Technocentre**
**Sce 00267 TCR GRA 2 36**
**1, Avenue du Golf**
**78288 Guyancourt (FR)**

(56) Documents cités:
EP-A- 1 420 159          WO-A-2007/107865
FR-A- 2 876 416          US-A1- 2004 149 274
US-A1- 2007 023 005      US-A1- 2007 079 614

• WANG ET AL: "Air fraction estimation for multiple combustion mode diesel engines with dual-loop EGR systems" CONTROL ENGINEERING PRACTICE, PERGAMON PRESS, OXFORD, GB, vol. 16, no. 12, 1 décembre 2008 (2008-12-01), pages 1479-1486, XP024529877 ISSN: 0967-0661 [extrait le 2008-06-10]

**Description**

L'invention concerne un moteur à combustion interne à allumage par auto-inflammation d'un mélange carburé homogène.

L'invention concerne plus particulièrement un moteur à combustion interne à allumage par auto-inflammation d'un mélange carburé homogène, ce moteur comportant un compresseur et une turbine formant turbocompresseur, et au moins un cylindre dans lequel un piston se déplace entre une position de point mort bas et une position de point mort haut en délimitant une chambre à combustion de volume variable, et comporte au moins un injecteur qui, au cours d'un cycle de combustion, introduit une quantité totale de carburant directement dans la chambre à combustion du cylindre en deux injections distinctes, avec :

-   une première injection, qui commence au voisinage du point mort haut du piston, et qui consiste à injecter une première quantité déterminée de carburant pour former un mélange carburé homogène avant son auto-inflammation dans la chambre à combustion,

-   une seconde injection, qui commence au début de la combustion du mélange carburé, et qui consiste à injecter une seconde quantité déterminée de carburant afin de ralentir la vitesse de combustion du mélange carburé formé pendant la première injection.

L'invention s'applique, en particulier, aux moteurs du type Diesel à quatre temps.

Les procédés de commande de ce type de moteur utilisent des stratégies d'injection du carburant qui permettent d'atteindre un compromis entre, d'une part, les émissions de polluants tels que des particules, ou fumées, des oxydes d'azote (NOx), des hydrocarbures (HC), et des monoxydes de carbone (CO) et, d'autre part, le bruit de la combustion et la consommation de carburant, en vue de respecter les normes internationales relatives aux émissions polluantes, au bruit et aux émissions de dioxyde de carbone ($CO_2$).

On connaît un tel type de moteur commandé selon un procédé de commande à injection divisée, dit « split injection », qui est par exemple décrit dans le document EP-A2-1,653,068.

Ce type de procédé de commande consiste à introduire la quantité totale de carburant directement dans la chambre à combustion du cylindre du moteur, en deux injections distinctes.

Une première injection commence au voisinage du point mort haut du piston et consiste à injecter dans la chambre à combustion une première quantité de carburant.

Une seconde injection commence au début de la combustion du mélange carburé et consiste à injecter une seconde quantité de carburant.

La seconde quantité de carburant permet de ralentir la vitesse de combustion du mélange carburé formé pendant la première injection dans la chambre à combustion et d'en abaisser la température, de façon à réduire les émissions d'oxydes d'azote et de particules.

De plus, le document US-B2-6,964,256 décrit un dispositif de contrôle de la combustion dans une chambre à combustion d'un cylindre d'un moteur, qui comporte un circuit de recirculation des gaz d'échappement et des moyens pour ajuster la quantité de gaz recirculés dans la chambre à combustion.

Selon le document US-B2-6,964,256, le moteur fonctionne selon un procédé de commande du type à injection divisée, qui permet d'ajuster le taux de gaz recirculés dans la chambre à combustion, afin de retarder la combustion pour réduire les émissions polluantes.

Un tel procédé de commande du type à injection divisée est satisfaisant, tant que la charge du moteur, ou sa pression moyenne effective, est inférieure à un certain seuil.

En effet, au delà d'une certaine pression moyenne effective, les émissions polluantes du moteur qui fonctionne selon un procédé de commande du type à injection divisée selon l'état de la technique, sont élevées, notamment les émissions d'oxydes d'azote.

L'invention vise à proposer un moteur qui fonctionne selon un procédé de commande à injection divisée et qui permet notamment de réduire les émissions d'oxydes d'azote lorsque la pression moyenne effective du moteur atteint un certain seuil.

Dans ce but, l'invention propose un moteur du type décrit précédemment, caractérisé en ce que le moteur comporte un premier circuit de recirculation des gaz basse pression, lesquels s'écoulent depuis l'aval de la turbine, jusqu'en amont du compresseur, et en ce que le moteur est commandé pour fonctionner selon un premier mode de fonctionnement, lorsque la pression moyenne effective du moteur est comprise dans une première plage de valeurs hautes, le mélange carburé comportant de l'air frais et des premiers gaz d'échappement recirculés qui proviennent du premier circuit de recirculation des gaz basse pression.

Selon d'autres caractéristiques de l'invention :

-   le moteur comporte un second circuit de recirculation des gaz haute pression, lesquels s'écoulent depuis l'amont de la turbine jusqu'en aval du compresseur, et en ce que le moteur est commandé pour fonctionner selon un second mode de fonctionnement, lorsque la pression moyenne effective du moteur est comprise dans une seconde plage de valeurs basses, le mélange carburé comportant de l'air frais et des seconds gaz d'échappement recirculés qui proviennent du second circuit de recirculation des gaz haute pression ;

- la première plage de valeurs hautes de la pression moyenne effective du moteur est comprise entre 5 bars et une valeur maximum, et ladite seconde plage de valeurs basses de la pression moyenne effective est comprise entre 0 et 5 bars ;

- lorsque le moteur fonctionne selon le premier mode de fonctionnement, le carburant est injecté dans la chambre à combustion du cylindre par l'injecteur associé à une pression d'injection qui est supérieure à 1200 bars ;
- lorsque le moteur fonctionne selon le premier mode de fonctionnement, le mélange d'air frais et des premiers gaz recirculés basse pression qui est admis dans la chambre à combustion est à une température inférieure à 50 degrés Celsius ;
- lorsque le moteur fonctionne selon le premier mode de fonctionnement, le mélange d'air frais et des premiers gaz recirculés basse pression qui est admis dans la chambre à combustion comporte un taux variable des premiers gaz recirculés basse pression variant entre 50 pour cent et 20 pour cent, le taux variable des premiers gaz recirculés diminuant lorsque la pression moyenne effective du moteur augmente ;
- lorsque le moteur fonctionne selon le second mode de fonctionnement, le carburant est injecté dans la chambre à combustion du cylindre par l'injecteur associé à une pression d'injection qui est comprise entre 200 et 800 bars ;
- lorsque le moteur fonctionne selon le second mode de fonctionnement, le mélange d'air frais et des seconds gaz recirculés haute pression qui est admis dans la chambre à combustion est à une température inférieure à 150 degrés Celsius ;
- lorsque le moteur fonctionne selon le second mode de fonctionnement, le mélange d'air frais et des seconds gaz recirculés haute pression qui est admis dans la chambre à combustion comporte un taux variable des seconds gaz recirculés variant entre 70 pour cent et 50 pour cent, le taux variable des seconds gaz recirculés haute pression diminuant lorsque la pression moyenne effective du moteur (10) augmente ;
- le moteur comporte :

  - au moins un injecteur qui est apte à introduire le carburant directement dans la chambre à combustion du cylindre du moteur,
  - un premier moyen de régulation du débit des premiers gaz recirculés basse pression s'écoulant dans le premier circuit de recirculation des gaz basse pression et un second moyen de régulation du débit des seconds gaz recirculés haute pression s'écoulant dans le second circuit de recirculation des gaz haute pression, afin de réguler le taux de gaz recirculés admis dans la chambre à combustion du moteur et la température du mélange d'air frais et des gaz recirculés,
  - des moyens de commande pour commander la première injection et la seconde injection du carburant dans la chambre à combustion.

D'autres caractéristiques et avantages de l'invention apparaîtront à la lecture de la description détaillée qui suit pour la compréhension de laquelle on se reportera aux dessins annexés parmi lesquels :

- la figure 1 est une vue schématique, illustrant un moteur qui fonctionne selon un procédé de commande à injection divisée selon l'invention et qui comporte un turbocompresseur, un circuit de recirculation des gaz basse pression, et un circuit de recirculation des gaz haute pression ;
- la figure 2 est un tableau dont l'axe des abscisses représente la pression d'injection en bars du carburant injecté dans la chambre à combustion du moteur, et l'axe des ordonnées représente le débit des polluants en milligramme par seconde, pour une pression moyenne effective égale à neuf bars ;
- la figure 3 est un tableau dont l'axe des abscisses représente la température d'admission du mélange comportant l'air frais et les gaz recirculés, et l'axe des ordonnées représente le débit des polluants en milligramme par seconde, pour une pression moyenne effective égale à six bars.

Dans la description qui va suivre, des éléments identiques, similaires ou analogues seront désignés par les mêmes chiffres de référence.

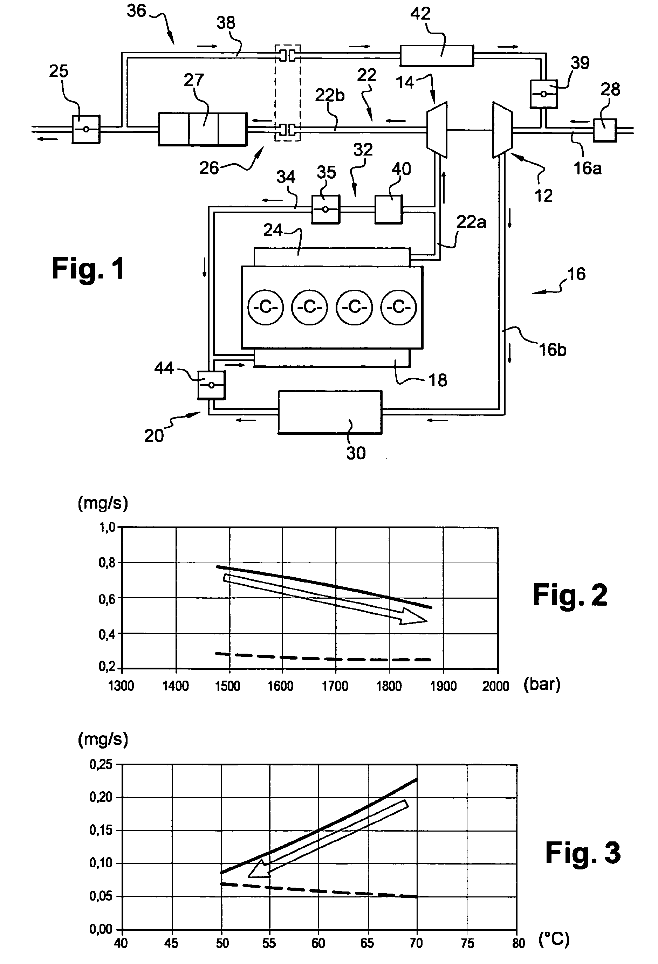

De même, dans la description, on utilisera à titre non limitatif les expressions "amont" et "aval" en référence à la figure 1 et aux définitions données dans la description.

Ainsi, les expressions "amont" et "aval" sont déterminées par le sens de circulation de l'air frais et/ou des gaz d'échappement de l'admission vers l'échappement du moteur, qui est représenté par des flèches sur les figures.

Le moteur 10 est un moteur à combustion interne à allumage par auto-inflammation d'un mélange carburé homogène.

De préférence, le carburant utilisé est du type Diesel.

Le moteur 10 comporte quatre cylindres C, dans chacun desquels un piston (non représenté) coulisse entre une position de point mort bas et une position de point mort haut, délimitant ainsi, avec la culasse du moteur 10, une chambre à combustion de volume variable.

Le coulissement du piston provoque, par l'intermédiaire d'un système bielle-manivelle (non représenté), la rotation du vilebrequin du moteur 10.

Chaque cylindre C comporte un injecteur (non représenté) qui débouche directement à l'intérieur de la chambre à combustion associée du cylindre C, pour injecter le carburant dans la chambre à combustion.

Le moteur 10, représenté schématiquement à la figure 1, comporte ici un turbocompresseur constitué d'un compresseur 12 qui est entraîné en rotation par une turbine 14.

Le compresseur 12 est agencé dans un conduit d'admission 16 en amont d'un collecteur d'admission 18 d'un circuit d'admission 20 du moteur 10.

Le conduit d'admission 16 comporte un tronçon amont 16a s'étendant depuis l'entrée du conduit d'admission 16 jusqu'au compresseur 12 et un tronçon aval 16a s'étendant du compresseur 12 jusqu'au collecteur d'admission 18.

Avantageusement, l'air admis dans le tronçon amont 16a du conduit d'admission 16 est traité par un filtre à air 28 avant d'être comprimé par le compresseur 12.

De préférence, le tronçon aval 16b du conduit d'admission 16 comporte un refroidisseur d'air de suralimentation 30.

De façon complémentaire, le moteur 10 comporte un volet d'admission 44 qui est agencé dans le tronçon aval 16b du conduit d'admission 16 et qui est interposé entre le refroidisseur d'air de suralimentation 30 et le collecteur d'admission 18.

La turbine 14 est agencée dans un conduit d'échappement 22 qui est agencé en aval d'un collecteur d'échappement 24 d'un circuit d'échappement 26 du moteur 10.

Le conduit d'échappement 22 comporte une partie amont 22a qui s'étend depuis le collecteur d'échappement 24, jusqu'à la turbine 14, et un tronçon aval 22b qui s'étend depuis la turbine 14 jusqu'à la sortie du conduit d'échappement 22.

De plus, le tronçon aval 22b du conduit d'échappement 22 comporte, d'amont en aval, un volet d'échappement 25 et un dispositif de dépollution 27.

Le dispositif de dépollution 27 comporte ici un filtre à particules, un piège à oxydes d'azote et un catalyseur pour neutraliser les hydrocarbures.

Le moteur 10 comporte un premier circuit de recirculation 36 des gaz d'échappement basse pression du moteur 10, comportant un premier conduit de recirculation 38 qui raccorde le tronçon aval 22b du conduit d'échappement 22 au tronçon amont 16a du conduit d'admission 16, de manière que des premiers gaz recirculés s'écoulent depuis l'aval de la turbine 14 jusqu'en amont du compresseur 12.

Comme on peut le voir à la figure 1, le premier conduit de recirculation 38 raccorde ici le tronçon aval 22b du conduit d'échappement 22 en aval du dispositif de dépollution 27.

Le premier conduit de recirculation 38 des gaz d'échappement comporte une vanne de régulation 39 qui constitue un premier moyen de régulation du débit des premiers gaz recirculés basse pression s'écoulant dans le premier conduit de recirculation 38 des gaz basse pression.

De plus, le premier conduit de recirculation 38 des gaz d'échappement comporte un refroidisseur 42 pour refroidir les seconds gaz recirculés basse pression.

Le moteur 10 comporte un second circuit de recirculation 32 des gaz d'échappement haute pression du moteur 10, comportant un second conduit de recirculation 34 qui raccorde le tronçon amont 22a du conduit d'échappement 22 au tronçon aval 16b du conduit d'admission 16, de manière que des seconds gaz recirculés s'écoulent depuis l'amont de la turbine 14 jusqu'en amont du collecteur d'échappement 24.

Comme on peut le voir à la figure 1, le second conduit de recirculation 34 raccorde ici le tronçon amont 22a du conduit d'échappement 22 en aval du volet d'admission 44.

Le second conduit de recirculation 34 des gaz d'échappement comporte une vanne de régulation 35 qui constitue un second moyen de régulation du débit des seconds gaz recirculés haute pression s'écoulant dans le second circuit de recirculation 32 des gaz haute pression.

De plus, le second conduit de recirculation 34 des gaz d'échappement comporte un refroidisseur 40 pour refroidir les seconds gaz recirculés haute pression.

Ainsi, il est possible de réguler le taux, ou la quantité, des premiers gaz recirculés basse pression, des seconds gaz recirculés haute pression et de l'air frais, qui sont admis dans la chambre à combustion de chaque cylindre C du moteur 10, en commandant le volet d'admission 44, la vanne de régulation 35 du second conduit de recirculation 34 et la vanne de régulation 39 du premier conduit de recirculation 38.

En régulant le taux des premiers gaz recirculés, des seconds gaz recirculés haute pression et de l'air frais, dits air d'admission, il est possible de réguler la température de l'air d'admission.

Le moteur 10 fonctionne ici selon un cycle à quatre temps comportant une phase d'admission, une phase de compression, une phase de détente, et une phase d'échappement.

Plus particulièrement, le moteur 10 fonctionne ici selon un procédé de commande dit à « injection divisée », ou « split injection ».

Un tel procédé est décrit en détail par exemple dans le document EP-A2-1 ,653,068.

Selon ce procédé de commande, la quantité totale de carburant nécessaire est introduite dans chaque cylindre C au moyen de deux injections distinctes, décalées dans le temps, au cours d'un cycle de combustion.

Une première injection commence au voisinage du point mort haut du piston, vers la fin de la phase de compression.

Cette première injection consiste à injecter une première quantité déterminée de carburant dans chaque chambre à combustion pour former un mélange carburé homogène. Cette première quantité de carburant correspond de préférence à la majeure partie du carburant nécessaire au cycle de combustion.

La valeur de la pression d'injection et la valeur de la perméabilité de chaque injecteur sont choisies de manière que la première injection provoque la formation d'un mélange carburé homogène dans la chambre à combustion associée, avant l'auto-inflammation du mélange carburé.

A la fin de la première injection, la chambre à combustion associée contient donc un mélange carburé homogène et sa combustion n'a pas encore commencée.

Une seconde injection commence au début de la combustion du mélange carburé homogène, c'est-à-dire quelques degrés d'angle vilebrequin après la fin de la première injection.

A cet effet, le moteur 10 comporte des moyens de commande (non représenté) pour commander la première injection et la seconde injection du carburant dans la chambre à combustion de chaque cylindre C.

Les moyens de commande sont aptes à injecter une quantité déterminée de carburant par la première injection et par la seconde injection.

De plus, les moyens de commande sont aptes à injecter la première injection et la seconde injection à un moment précis dans le temps.

Cette seconde injection consiste à introduire dans la chambre à combustion une faible quantité de carburant qui provoque un ralentissement de la vitesse de combustion du mélange carburé introduit pendant la première injection.

La seconde injection permet de retarder de quelques degrés d'angle vilebrequin la combustion complète du mélange carburé homogène, ce qui entraîne une diminution du bruit de la combustion.

On note que la première et la seconde injection suffisent à injecter la totalité du carburant nécessaire dans le cylindre associé pour réaliser un cycle de combustion. La quantité de carburant introduite pendant la seconde injection vient compléter la quantité de carburant introduite pendant la première injection.

Conformément au procédé de commande du moteur 10, le moteur 10 est commandé pour fonctionner selon un premier mode de fonctionnement, ou selon un second mode de fonctionnement, en fonction de la pression moyenne effective (PME) du moteur 10.

La pression moyenne effective, exprimée en bars, est déterminée en fonction du couple moteur en Newton par mètre (N.m) et/ou de la cylindrée en litre du moteur.

La pression moyenne effective se calcule selon la formule suivante :

$$PME = (0{,}04\ \pi \times couple\ moteur)/cylindr\acute{e}e$$

dans laquelle :

- le « couple moteur » est exprimé en Newton par mètre (N.m),
- la « cylindrée » est exprimée en litre.

Selon le procédé de commande, le moteur 10 est commandé pour fonctionner selon le premier mode de fonctionnement lorsque la pression moyenne effective du moteur 10 est comprise dans une première plage de valeurs hautes, qui correspond à une pression moyenne effective élevée, ou à une charge élevée du moteur 10.

La première plage de valeurs hautes de la pression effective du moteur 10 est ici comprise entre 5 bars et une valeur maximum du moteur 10, par exemple 12 bars.

Le premier mode de fonctionnement du moteur 10 consiste à admettre dans chaque chambre à combustion du moteur 10 de l'air frais et des premiers gaz d'échappement recirculés qui proviennent du premier circuit de recirculation 36 des gaz basse pression, de sorte que l'air d'admission présent dans chaque chambre à combustion comporte un taux variable des premiers gaz recirculés basse pression.

Selon ce premier mode de fonctionnement, l'air d'admission comporte un taux variable des premiers gaz recirculés basse pression qui varie entre 50 pour cent et 20 pour cent, le taux variable des premiers gaz recirculés basse pression diminuant lorsque la pression moyenne effective du moteur 10 augmente.

A titre d'exemple, l'air d'admission comporte environ 50 pour cent des premiers gaz recirculés basse pression, pour environ 50 pour cent d'air frais, lorsque la pression moyenne effective du moteur 10 est égale à une valeur proche de 5 bars.

De même, l'air d'admission comporte environ 20 pour cent des premiers gaz recirculés basse pression, pour environ 80 pour cent d'air frais, lorsque la pression moyenne effective du moteur 10 est égale à une valeur proche de 12 bars.

Le taux des premiers gaz recirculés basse pression varie sensiblement en fonction du régime du moteur 10. Plus le régime du moteur 10 est élevé et moins le taux des premiers gaz recirculés basse pression est élevé.

La variation du taux des premiers gaz recirculés basse pression est environ égale à 10 pour cent entre un régime élevé et un régime faible du moteur 10.

Toujours selon le premier mode de fonctionnement du moteur 10, le carburant est injecté dans chaque chambre à combustion par l'injecteur associé à une pression d'injection qui est supérieure à 1200 bars.

De préférence, la pression d'injection est comprise entre 1500 bars et 1900 bars.

On a représenté à la figure 2 un tableau dont l'axe des abscisses représente la pression d'injection en bars du carburant injecté dans la chambre à combustion du moteur 10, et l'axe des ordonnées représente le débit des polluants en milligramme par seconde (mg/s) à la sortie de la chambre à combustion.

Selon le tableau de la figure 2, la pression moyenne effective du moteur 10 est égale à neuf bars pour un régime de 2500 tours par minute.

Le tableau de la figure 2 représente une première courbe en trait continu qui représente le débit de particules en fonction de la pression d'injection.

La première courbe montre que le débit de particules diminue lorsque la pression d'injection augmente.

En effet, le débit de particules est égale à 0,72 mg/s pour une pression d'injection égale à 1480 bars, et ce même débit de particules est égale à 0,55 mg/s pour une pression d'injection égale à 1880 bars, soit une diminution de 30 pour cent du débit de particules.

De plus, le tableau de la figure 2 représente une seconde courbe en trait pointillé qui représente le débit d'oxydes d'azote en fonction de la pression d'injection.

La seconde courbe illustre une baisse sensible du débit d'oxydes d'azote, qui inférieur à 0,3 mg/s, lorsque la pression d'injection augmente.

De même, selon le premier mode de fonctionnement du moteur 10, le mélange d'air frais et des premiers gaz recirculés basse pression, ou air d'admission, qui sont injectés dans chaque chambre à combustion du moteur 10, est à une température qui est inférieure à 50 degrés Celsius.

A titre d'exemple, la température du mélange d'air frais et des premiers gaz recirculés est environ égale à 30° Celsius lorsque le taux des premiers gaz recirculés basse pression est égal à 50 pour cent, et donc que la pression moyenne effective du moteur 10 est au sensiblement égale à 5 bars.

De même, la température du mélange d'air frais et des premiers gaz recirculés basse pression est environ égal à 50° Celsius lorsque le taux des premiers gaz recirculés basse pression est égal à 20 pour cent, et donc que la pression moyenne effective du moteur 10 est au sensiblement égale à 12 bars.

La température inférieure à 50° Celsius des premiers gaz recirculés basse pression est obtenue grâce au premier circuit des gaz recirculés 36 basse pression et au refroidisseur 42 associé.

On a représenté à la figure 3 un tableau dont l'axe des abscisses représente la température du mélange d'air frais et des premiers gaz recirculés basse pression qui est admis dans la chambre à combustion du moteur 10, et l'axe des ordonnées représente le débit des polluants en milligramme par seconde (mg/s) à la sortie de la chambre à combustion.

Selon le tableau de la figure 3, la pression moyenne effective du moteur 10 est égale à six bars pour un régime de 1750 tours par minute, une pression d'injection de 1600 bars, une première injection de carburant comportant 45 pour cent de la quantité totale de carburant injecté et une seconde injection de carburant comportant 55 pour cent de la quantité totale de carburant injecté, pour un bruit égalé à 84 Décibels.

Le tableau de la figure 3 représente une première courbe en trait continu qui représente le débit de particules en fonction de la température du mélange d'air frais et des premiers gaz recirculés basse pression.

La première courbe montre que le débit de particules diminue lorsque la température du mélange d'air frais et des premiers gaz recirculés basse pression diminue.

En effet, le débit de particules est égale à 0,23 mg/s pour une température égale à 70° Celsius, et ce même débit de particules est égale à 0,09 mg/s pour une température égale à 50° Celsius, soit une diminution d'environ 60 pour cent du débit de particules.

De plus, le tableau de la figure 3 représente une seconde courbe en trait pointillé qui représente le débit d'oxydes d'azote en fonction de la température du mélange d'air frais et des premiers gaz recirculés basse pression.

La seconde courbe illustre une augmentation sensible du débit d'oxydes d'azote, qui reste inférieur à 0,07 mg/s, lorsque la température du mélange d'air frais et des premiers gaz recirculés basse pression diminue.

Selon le procédé de commande du moteur 10, le moteur 10 est commandé pour fonctionner selon le second mode de fonctionnement lorsque la pression moyenne effective du moteur 10 est comprise dans une seconde plage de valeurs basses, qui correspond à une faible pression moyenne effective, ou à une faible charge du moteur 10.

La seconde plage de valeurs basses de la pression moyenne effective du moteur 10 est ici comprise entre 0 et 5 bars.

Cette seconde plage de valeurs basses de la pression moyenne effective du moteur 10 varie en fonction de la capacité du refroidisseur 40 pour refroidir les seconds gaz recirculés haute pression.

En effet, le mélange d'air frais et des seconds gaz recirculés haute pression, doit être de préférence à une température qui est inférieure à 150 degrés Celsius.

Le second mode de fonctionnement du moteur 10 consiste à admettre dans chaque chambre à combustion du moteur 10 de l'air frais et des seconds gaz d'échappement recirculés qui proviennent du second circuit de recirculation 32 des gaz haute pression, de sorte que l'air d'admission présent dans chaque chambre à combustion comporte un taux variable des seconds gaz recirculés haute pression.

Selon ce second mode de fonctionnement, l'air d'admission comporte un taux variable des seconds gaz recirculés qui varie entre 70 pour cent et 50 pour cent, le taux variable des seconds gaz recirculés haute pression diminuant lorsque la pression moyenne effective augmente.

A titre d'exemple, l'air d'admission comporte environ 70 pour cent des seconds gaz recirculés haute pression, pour environ 30 pour cent d'air frais, lorsque la pression moyenne effective est égale à une valeur proche de zéro bar.

De même, l'air d'admission comporte environ 50 pour cent des seconds gaz recirculés haute pression, pour environ 50 pour cent d'air frais, lorsque la pression moyenne effective est égale à une valeur proche de cinq bars.

Le taux des seconds gaz recirculés haute pression varie sensiblement en fonction du régime du moteur 10. Plus le régime du moteur 10 est élevé et moins le taux des seconds gaz recirculés est élevé.

La variation du taux des seconds gaz recirculés haute pression est environ égale à 10 pour cent entre un régime élevé et un régime faible du moteur 10.

A titre d'exemple, l'air d'admission comporte environ 55 pour cent des seconds gaz recirculés haute pression, lorsque la pression moyenne effective est égale à une valeur proche de trois bars et lorsque le régime du moteur 10 est élevé.

A l'inverse, l'air d'admission comporte environ 65 pour cent des seconds gaz recirculés haute pression, lorsque la pression moyenne effective est égale à une valeur proche de trois bars et lorsque le régime du moteur 10 est faible.

A titre indicatif, le régime du moteur 10 est dit faible par exemple lorsque le moteur 10 tourne à moins de 2000 tours par minute, et le régime du moteur 10 est dit élevé par exemple lorsque le moteur 10 tourne à plus de 2000 tours par minute.

Toutefois, ces plages de valeurs qui définissent le régime du moteur sont définies par rapport à une problématique de dépollution.

Toujours selon le second mode de fonctionnement du moteur 10, le carburant est injecté par l'injecteur dans la chambre à combustion associée à une pression d'injection qui est comprise entre 200 et 800 bars.

## Revendications

1. Moteur (10) à combustion interne à allumage par auto-inflammation d'un mélange carburé homogène, ce moteur (10) comportant un compresseur (12) et une turbine (14) formant turbocompresseur, et au moins un cylindre (C) dans lequel un piston se déplace entre une position de point mort bas et une position de point mort haut en délimitant une chambre à combustion de volume variable, et comporte au moins un injecteur qui, au cours d'un cycle de combustion, introduit une quantité totale de carburant directement dans la chambre à combustion du cylindre (C) en deux injections distinctes, avec :

   - une première injection, qui commence au voisinage du point mort haut du piston, et qui consiste à injecter une première quantité déterminée de carburant pour former un mélange carburé homogène avant son auto-inflammation dans la chambre à combustion,
   - une seconde injection, qui commence au début de la combustion du mélange carburé, et qui consiste à injecter une seconde quantité déterminée de carburant afin de ralentir la vitesse de combustion du mélange carburé formé pendant la première injection,

   le moteur (10) comportant un premier circuit de recirculation (36) des gaz basse pression, lesquels s'écoulent depuis l'aval de la turbine (14), jusqu'en amont du compresseur (12), et un second circuit de recirculation (32) des gaz haute pression, lesquels s'écoulent depuis l'amont de la turbine (14), jusqu'en aval du compresseur (12), **caractérisé en ce que** le moteur (10) est commandé pour fonctionner selon la pression moyenne effective du moteur (10) :

- selon un premier mode de fonctionnement, lorsque la pression moyenne effective du moteur (10) est comprise dans une première plage de valeurs hautes, le mélange carburé comportant de l'air frais et des premiers gaz d'échappement recirculés qui proviennent du premier circuit (36) de recirculation des gaz basse pression,
- selon un second mode de fonctionnement, lorsque la pression moyenne effective du moteur (10) est comprise dans une seconde plage de valeurs basses, le mélange carburé comportant de l'air frais et des seconds gaz d'échappement recirculés qui proviennent du second circuit (32) de recirculation des gaz haute pression.

2. Moteur (10) selon la revendication 1, **caractérisé en ce que** ladite première plage de valeurs hautes de la pression moyenne effective du moteur (10) est comprise entre 5 bars et une valeur maximum, et **en ce que** ladite seconde plage de valeurs basses de la pression moyenne effective est comprise entre 0 et 5 bars.

3. Moteur (10) selon l'une quelconque des revendications précédentes, **caractérisé en ce que**, lorsque le moteur (10) fonctionne selon le premier mode de fonctionnement, le carburant est injecté dans la chambre à combustion du cylindre (C) par l'injecteur associé à une pression d'injection qui est supérieure à 1200 bars.

4. Moteur (10) selon l'une quelconque des revendications précédentes, **caractérisé en ce que**, lorsque le moteur (10) fonctionne selon le premier mode de fonctionnement, le mélange d'air frais et des premiers gaz recirculés basse pression qui est admis dans la chambre à combustion est à une température inférieure à 50 degrés Celsius.

5. Moteur (10) selon l'une quelconque des revendications précédentes, **caractérisé en ce que**, lorsque le moteur (10) fonctionne selon le premier mode de fonctionnement, le mélange d'air frais et des premiers gaz recirculés basse pression qui est admis dans la chambre à combustion comporte un taux variable des premiers gaz recirculés basse pression variant entre 50 pour cent et 20 pour cent, le taux variable des premiers gaz recirculés diminuant lorsque la pression moyenne effective du moteur (10) augmente.

6. Moteur (10) selon la revendication 1, **caractérisé en ce que**, lorsque le moteur (10) fonctionne selon le second mode de fonctionnement, le carburant est injecté dans la chambre à combustion du cylindre (C) par l'injecteur associé à une pression d'injection qui est comprise entre 200 et 800 bars.

7. Moteur (10) selon les revendications 1 et 6, **caractérisé en ce que**, lorsque le moteur (10) fonctionne selon le second mode de fonctionnement, le mélange d'air frais et des seconds gaz recirculés haute pression qui est admis dans la chambre à combustion est à une température inférieure à 150 degrés Celsius.

8. Moteur (10) selon les revendications 1 et 7, **caractérisé en ce que**, lorsque le moteur (10) fonctionne selon le second mode de fonctionnement, le mélange d'air frais et des seconds gaz recirculés haute pression qui est admis dans la chambre à combustion comporte un taux variable des seconds gaz recirculés variant entre 70 pour cent et 50 pour cent, le taux variable des seconds gaz recirculés haute pression diminuant lorsque la pression moyenne effective du moteur (10) augmente.

9. Moteur (10) selon l'une quelconque des revendications 1 à 8, **caractérisé en ce qu'**il comporte :

- au moins un injecteur qui est apte à introduire le carburant directement dans la chambre à combustion du cylindre (C) du moteur (10) ;
- un premier moyen de régulation du débit des premiers gaz recirculés basse pression s'écoulant dans le premier circuit de recirculation (36) des gaz basse pression et un second moyen de régulation du débit des seconds gaz recirculés haute pression s'écoulant dans le second circuit de recirculation (32) des gaz haute pression, afin de réguler le taux de gaz recirculés admis dans la chambre à combustion du moteur (10) et la température du mélange d'air frais et des gaz recirculés ;
- des moyens de commande pour commander la première injection et la seconde injection du carburant dans la chambre à combustion.

**Claims**

1. Compression-ignition internal combustion engine (10) in which a homogeneous carburetted mixture self-ignites, the engine (10) comprising a compressor (12) and a turbine (14) forming a turbocompressor, and at least one cylinder (C) in which a piston moves between a bottom dead centre position and a top dead centre position thereby delimiting a variable-volume combustion chamber, and comprises at least one injector which, during the course of a combustion cycle, introduces a total quantity of fuel directly into the combustion chamber of the cylinder (C) in two separate injections, with:

   - a first injection, which begins when the piston is near top dead centre, and which consists in injecting a first determined quantity of fuel to form a homogeneous carburreted mixture before it self-ignites in the combustion chamber,
   - a second injection, which begins at the start of the combustion of the carburreted mixture, and which consists in injecting a second determined quantity of fuel in order to slow the rate of combustion of the carburreted mixture formed during the first injection, the engine (10) comprising a first recirculation circuit (36) for the low-pressure gases, which flow from downstream of the turbine (14) to upstream of the compressor (12), and a second recirculation circuit (32) for the high-pressure gases which flow from upstream of the turbine (14) to downstream of the compressor (12),

   **characterized in that** the engine (10) is made to operate according to the mean effective pressure of the engine (10):

   - in a first mode of operation when the mean effective pressure of the engine (10) falls within a first range of high values, the carburreted mixture comprising fresh air and first recirculated exhaust gases which come from the first recirculation circuit (36) for the low-pressure gases,
   - in a second mode of operation when the mean effective pressure of the engine (10) falls within a second range of low values, the carburreted mixture comprising fresh air and second recirculated exhaust gases which come from the second recirculation circuit (32) for the high-pressure gases.

2. Engine (10) according to Claim 1, **characterized in that** the said first range of high values for the mean effective pressure of the engine (10) is between 5 bar and a maximum value, and **in that** the said second range of low values for the mean effective pressure is between 0 and 5 bar.

3. Engine (10) according to any one of the preceding claims, **characterized in that**, when the engine (10) is operating in the first mode of operation, the fuel is injected into the combustion chamber of the cylinder (C) by the injector associated with an injection pressure which is higher than 1200 bar.

4. Engine (10) according to any one of the preceding claims, **characterized in that** when the engine (10) operates in the first mode of operation, the mixture of fresh air and of low-pressure first recirculated gases which is admitted into the combustion chamber is at a temperature of below 50 degrees Celsius.

5. Engine (10) according to any one of the preceding claims, **characterized in that** when the engine (10) is operating in the first mode of operation, the mixture of fresh air and of low-pressure first recirculated gases which is admitted to the combustion chamber contains a variable proportion of the low-pressure first recirculated gases that varies between 50 per cent and 20 per cent, the variable proportion of the first recirculated gases decreasing as the mean effective pressure of the engine (10) increases.

6. Engine (10) according to Claim 1, **characterized in that** when the engine (10) is operating in the second mode of operation, the fuel is injected into the combustion chamber of the cylinder (C) by the injector associated with an injection pressure which is between 200 and 800 bar.

7. Engine (10) according to Claims 1 and 6, **characterized in that** when the engine (10) is operating in the second mode of operation, the mixture of fresh air and of high-pressure secondary recirculated gases which is admitted to the combustion chamber is at a temperature of below 150 degrees Celsius.

8. Engine (10) according to Claims 1 and 7, **characterized in that** when the engine (10) is operating in the second mode of operation, the mixture of fresh air and of high-pressure secondary recirculated gases which is admitted to the combustion chamber contains a variable proportion of the secondary recirculated gases that varies between 70 per cent and 50 per cent, the variable proportion of the high-pressure secondary recirculated gases decreasing as the mean effective pressure of the engine (10) increases.

9. Engine (10) according to any one of Claims 1 to 8, **characterized in that** it comprises:

    - at least one injector which is able to introduce the fuel directly into the combustion chamber of the cylinder (C) of the engine (10);
    - a first means of regulating the flow rate of the low-pressure first recirculated gases flowing through the first recirculation circuit (36) for low-pressure gases and a second means of regulating the flow rate of the high-pressure secondary recirculated gases flowing through the second recirculation circuit (32) for high-pressure gases, in order to regulate the proportion of recirculated gases admitted to the combustion chamber of the engine (10) and the temperature of the mixture of fresh air and recirculated gases;
    - control means for controlling the first injection and the second injection of fuel into the combustion chamber.

**Patentansprüche**

1. Verbrennungsmotor (10) mit Zündung durch Selbstentzündung eines homogenen Kraftstoffluftgemischs, wobei dieser Motor (10) einen Kompressor (12) und eine Turbine (14), die einen Turbokompressor bilden, und mindestens einen Zylinder (C) aufweist, in dem ein Kolben sich zwischen einer unteren Totpunktstellung und einer oberen Totpunktstellung verschiebt, indem er einen Brennraum variablen Volumens begrenzt, und mindestens eine Einspritzdüse aufweist, die während eines Brennzyklus eine Gesamtkraftstoffmenge in zwei getrennten Einspritzvorgängen direkt in den Brennraum des Zylinders (C) einführt, mit:

    - einer ersten Einspritzung, die in der Nähe des oberen Totpunkts des Kolbens beginnt, und die darin besteht, eine erste bestimmte Kraftstoffmenge einzuspritzen, um ein homogenes Kraftstoffluftgemisch vor seiner Selbstentzündung im Brennraum zu formen,
    - eine zweite Einspritzung, die zu Beginn der Verbrennung des Kraftstoffluftgemischs beginnt, und die darin besteht, eine zweite bestimmte Kraftstoffmenge einzuspritzen, um die Brenngeschwindigkeit des während der ersten Einspritzung geformten Kraftstoffluftgemischs zu verlangsamen,

wobei der Motor (10) einen ersten Rückführkreislauf (36) der Niederdruckgase, die von hinter der Turbine (14) bis vor den Kompressor (12) strömen, und einen zweiten Rückführkreislauf (32) der Hochdruckgase aufweist, die von vor der Turbine (14) bis hinter den Kompressor (12) strömen, **dadurch gekennzeichnet, dass** der Motor (10) gesteuert wird, um gemäß dem mittleren effektiven Druck des Motors (10) zu arbeiten:

    - gemäß einer ersten Betriebsart, wenn der mittlere effektive Druck des Motors (10) in einem ersten Bereich hoher Werte liegt, wobei das Kraftstoffluftgemisch Frischluft und erste rückgeführte Abgase aufweist, die vom ersten Rückführkreislauf (36) der Niederdruckgase kommen,
    - gemäß einer zweiten Betriebsart, wenn der mittlere effektive Druck des Motors (10) in einem zweiten Bereich niederer Werte liegt, wobei das Kraftstoffluftgemisch Frischluft und zweite rückgeführte Abgase aufweist, die vom zweiten Rückführkreislauf (32) der Hochdruckgase kommen.

2. Motor (10) nach Anspruch 1, **dadurch gekennzeichnet, dass** der erste Bereich hoher Werte des mittleren effektiven Drucks des Motors (10) zwischen 5 Bar und einem maximalen Wert liegt, und dass der zweite Bereich niederer Werte des mittleren effektiven Drucks zwischen 0 und 5 Bar liegt.

3. Motor (10) nach einem der vorhergehenden Ansprüche, **dadurch gekennzeichnet, dass**, wenn der Motor (10) gemäß der ersten Betriebsart arbeitet, der Kraftstoff durch die zugeordnete Einspritzdüse mit einem Einspritzdruck in den Brennraum des Zylinders (C) eingespritzt wird, der über 1200 Bar liegt.

4. Motor (10) nach einem der vorhergehenden Ansprüche, **dadurch gekennzeichnet, dass**, wenn der Motor (10) gemäß der ersten Betriebsart arbeitet, das Gemisch aus Frischluft und den ersten rückgeführten Niederdruckgasen, das in den Brennraum angesaugt wird, auf einer Temperatur niedriger als 50 Grad Celsius ist.

5. Motor (10) nach einem der vorhergehenden Ansprüche, **dadurch gekennzeichnet, dass**, wenn der Motor (10) gemäß der ersten Betriebsart arbeitet, das Gemisch aus Frischluft und den ersten rückgeführten Niederdruckgasen, das in den Brennraum angesaugt wird, einen variablen Prozentsatz von ersten rückgeführten Niederdruckgasen aufweist, der zwischen 50 Prozent und 20 Prozent variiert, wobei der variable Prozentsatz der ersten rückgeführten Gase abnimmt, wenn der mittlere effektive Druck des Motors (10) zunimmt.

6. Motor (10) nach Anspruch 1, **dadurch gekennzeichnet, dass**, wenn der Motor (10) gemäß der zweiten Betriebsart arbeitet, der Kraftstoff durch die zugeordnete Einspritzdüse mit einem Einspritzdruck in den Brennraum des Zylinders (C) eingespritzt wird, der zwischen 200 und 800 Bar liegt.

7. Motor (10) nach den Ansprüchen 1 und 6, **dadurch gekennzeichnet, dass**, wenn der Motor (10) gemäß der zweiten Betriebsart arbeitet, das Gemisch aus Frischluft und den zweiten rückgeführten Hochdruckgasen, das in den Brennraum angesaugt wird, auf einer Temperatur von weniger als 150 Grad Celsius ist.

8. Motor (10) nach den Ansprüchen 1 und 7, **dadurch gekennzeichnet, dass**, wenn der Motor (10) gemäß der zweiten Betriebsart arbeitet, das Gemisch aus Frischluft und den zweiten rückgeführten Hochdruckgasen, das in den Brennraum angesaugt wird, einen variablen Prozentsatz von zweiten rückgeführten Gasen aufweist, der zwischen 70 Prozent und 50 Prozent variiert, wobei der variable Prozentsatz der zweiten rückgeführten Hochdruckgase abnimmt, wenn der mittlere effektive Druck des Motors (10) zunimmt.

9. Motor (10) nach einem der Ansprüche 1 bis 8, **dadurch gekennzeichnet, dass** er aufweist:

   - mindestens eine Einspritzdüse, die den Kraftstoff direkt in den Brennraum des Zylinders (C) des Motors (10) einführen kann;
   - eine erste Einrichtung zur Regelung der Menge der ersten rückgeführten Niederdruckgase, die im ersten Rückführkreislauf (36) der Niederdruckgase strömen, und eine zweite Einrichtung zur Regelung der zweiten rückgeführten Hochdruckgase, die im zweiten Rückführkreislauf (32) der Hochdruckgase strömen, um den Prozentsatz von in den Brennraum des Motors (10) angesaugten rückgeführten Gasen und die Temperatur des Gemischs aus Frischluft und den rückgeführten Gasen zu regeln;
   - Steuereinrichtungen, um die erste Einspritzung und die zweite Einspritzung des Kraftstoffs in den Brennraum zu steuern.

**Fig. 1**

**Fig. 2**

**Fig. 3**

## RÉFÉRENCES CITÉES DANS LA DESCRIPTION

**Documents brevets cités dans la description**

- EP 1653068 A2

- US 6964256 B2